# EUROPÄISCHE PATENTSCHRIFT

(11) **EP 0 548 569 B1**
(45) Veröffentlichungstag und Bekanntmachung des Hinweises auf die Patenterteilung: **06.03.1996**
(21) Anmeldenummer: 92120040.8
(22) Anmeldetag: 25.11.1992
(51) Int. Cl.: C01B 13/02

(54) **Chemischer Sauerstoffgenerator mit Reaktionssteuerelementen**
Chemical oxygen generator with elements to control reaction
Générateur chimique d'oxygène avec dispositif de contrôle de réaction

(30) Priorität: 21.12.1991 DE 4142505
(43) Veröffentlichungstag der Anmeldung: 30.06.1993
(73) Patentinhaber: Drägerwerk Aktiengesellschaft, D-23542 Lübeck (DE)
(72) Erfinder: Bechthold, Hans-Christoph, Dr., W-2000 Hamburg 74 (DE); Ernst, Rainer, W-2406 Curau (DE); Burchardt, Udo, W-2401 Gross Grönau (DE); Gerdts, Uwe, Dr., W-2418 Ratzeburg (DE); Vogeler, Karsten, W-2077 Brunsbek 3 (DE)

(56) Entgegenhaltungen:
- CH-A- 139 956
- CH-A- 180 448
- DE-A- 2 026 663
- GB-A- 2 160 187

## Beschreibung

Die Erfindung betrifft einen chemischen Sauerstoffgenerator mit einer innerhalb eines Gehäuses angeordneten Chemikalfüllung, einem Zünder zum Ingangsetzen einer flächig durch die Chemikalfüllung laufenden Reaktionsfront einer exothermen Sauerstoff freisetzenden Reaktion, einem Sauerstoffauslaß sowie mindestens einem innerhalb der Chemikalfüllung angeordneten Reaktionssteuerelement.

Chemische Sauerstoffgeneratoren sind aufgebaut aus einer Patrone, die eine Chemikalfüllung enthält und meist an einem Ende eine Startvorrichtung in Form eines Zünders und am gegenüberliegenden Ende einen Sauerstoffauslaß aufweist. Nach Aktivierung der Startvorrichtung setzt die Chemikalfüllung (z.B. Natriumchlorat mit Zusätzen) in einer exothermen Reaktion Sauerstoff frei, der die Patrone durch den Sauerstoffauslaß verläßt. Die Reaktionsfront läuft von der Startvorrichtung zum Sauerstoffauslaß durch. Die pro Zeiteinheit gelieferte Sauerstoffmenge (der Sauerstoffflow) und die Lieferdauer hängen von der Geometrie der Chemikalfüllung und von deren Rezeptur ab. Darüber hinausgehend können Flow und Lieferdauer durch Reaktionssteuerelemente beeinflußt werden.

In der CH-PS 139 956 ist ein Sauerstoffgenerator beschrieben, bei dem die Chemikalfüllung vom Zündende ausgehend mit einem Schlitz versehen ist, der sich parallel zur Laufrichtung der Reaktionsfront bis in die Nähe des gegenüberliegenden Endes erstreckt. In den Schlitz wird eine Isolierplatte als Trennelement eingeschoben, die das Überspringen der Reaktion auf die andere Seite verhindert. Wird die Chemikalfüllung gezündet, so reagiert sie zunächst nur auf der einen Seite der Isolierplatte. Die Reaktionsfront läuft zum gegenüberliegenden Ende, greift hier auf die andere Seite der Isolierplatte über und läuft an dieser zurück bis zum Zündende. Auf diese Art wird eine etwa doppelte Laufzeit bei halbiertem Flow des Generators gegenüber einer Ausführung ohne Trennelement erhalten.

Nachteilig an diesem Generator ist, daß über die rein geometrische Verdoppelung des Reaktionsweges hinaus keine Beeinflussung von Flow und Lieferdauer möglich ist.

In der CH-PS 183 336 ist ein chemischer Sauerstoffgenerator beschrieben, der durch Trennwände in Längsrichtung in Segmente unterteilt wird. Über das Material der Trennwände und deren Funktion werden keine Aussagen gemacht. Die Beschreibung läßt jedoch vermuten, daß es sich um paraffinierten Asbestkarton handelt.

In der CH-PS 180 448 ist ein Generator beschrieben, der mit Teil-Trennwänden aus Asbest oder aus mit Paraffin überzogenem Metall versehen ist. Diese Wände sind quer zur Laufrichtung der Reaktionsfront angeordnet. Sie dienen dazu, das durch den Generator strömende Gas gleichmäßig zu verteilen. Der Paraffinüberzug dient vermutlich nur als Korrosionsschutz.

Aus den beiden letztgenannten Schriften ist kein Hinweis zu entnehmen, wie mit eingebauten Wänden der Flow und die Laufzeit eines Generators zu beeinflussen wären.

Aufgabe der Erfindung ist es, einen chemischen Sauerstoffgenerator der genannten Art dahingehend zu verbessern, daß der Sauerstoffflow und die Lieferdauer mittels eines Reaktionssteuerelementes durch dessen Material und/oder dessen Formgebung beeinflußt werden können.

Die Aufgabe wird dadurch gelöst, daß das Reaktionssteuerelement in Form einer Förderschnecke ausgebildet ist, die aus Metallblech oder einem thermischen Isolatormaterial gefertigt ist.

Weiterhin kann die Aufgabe auch dadurch gelöst werden, daß das Reaktionssteuerelement als spiralig gewundenes aus Metallblech oder einem thermischen Isolatormaterial gefertigtes Band ausgeführt ist und sich in einem dosenförmigen Gehäuse von einem Boden bis zu einem Deckel erstreckt, wobei das eine Ende des Bandes mit der Außenwandung des Gehäuses verbunden ist und das andere Ende des Bandes in der Nähe des Zentrums des Gehäuses liegt, wodurch ein spiralig gewundener Kanal gebildet ist, der an seinem einen Ende mit einem Zünder und an seinem anderen Ende mit einem Sauerstoffauslaß versehen ist.

Vorteil der Erfindung ist es, daß durch die Wahl verschiedener Materialien und Materialdicken sowie durch Anzahl, Anordnung und Formgebung der Reaktionssteuerelemente der Sauerstoffflow und die Lieferdauer in weiten Grenzen beeinflußt werden können. Der Sauerstoffflow kann auch einem vorgebbaren Profil angepaßt werden.

Ein aus Metallblech gefertigtes Reaktionssteuerelement entzieht der Reaktionsfront Wärme, verlangsamt somit die Reaktion. Das geschieht zum einen dadurch, daß das Metallblech selbst Wärme absorbiert und zum anderen dadurch, daß es Wärme zum Generatorgehäuse und darüber an die Umgebung ableitet. Die Materialart und die Dicke des Bleches beeinflussen die abgeleitete Wärmemenge.

Ein aus thermischem Isolatormaterial gefertigtes Reaktionssteuerelement behindert die Wärmeleitung in den hinter dem Reaktionssteuerelement liegenden Teil der Chemikalfüllung, reduziert somit dessen Vorwärmung und es verhindert ein Überspringen der Reaktion. Dadurch ist bei entsprechender Formgebung des Reaktionssteuerelementes eine geometrische Verlängerung des Reaktionsweges, verbunden mit einer verlängerten Lieferdauer des Generators möglich. Als Metallblech können Materialien wie z.B. Edelstahl, Messing und Kupfer verwandt werden. Als thermisches Isolatormaterial kommen in Frage: Platten, Faserplatten, Vliese oder aufgeschäumte Körper aus Glas, Keramik oder sonstigen anorganischen Materialien.

Die Reaktionssteuerelemente entziehen der Reaktionsfront Wärme und verlangsamen damit die Reaktion und erhöhen die Lieferdauer des Generators.

Durch den Einbau eines schneckenförmigen Reaktionssteuerelementes in Form einer Förderschnecke, das einen wendelförmigen Weg der Reaktionsfront erzwingt oder in einer Form ähnlich einem Schneckengehäuse, das einen spiralig gewundenen Weg der Reaktionsfront erzwingt, kann die Lieferdauer noch einmal erheblich verlängert werden.

Die Erfindung wird anhand von Ausführungsbeispielen und der Zeichnung erläutert.

Es zeigen:
- Fig. 1: einen Sauerstoffgenerator mit einem schneckenförmigen Reaktionssteuerelement und
- Fig. 2: einen Sauerstoffgenerator mit einem spiralig gewundenen Reaktionssteuerelement.

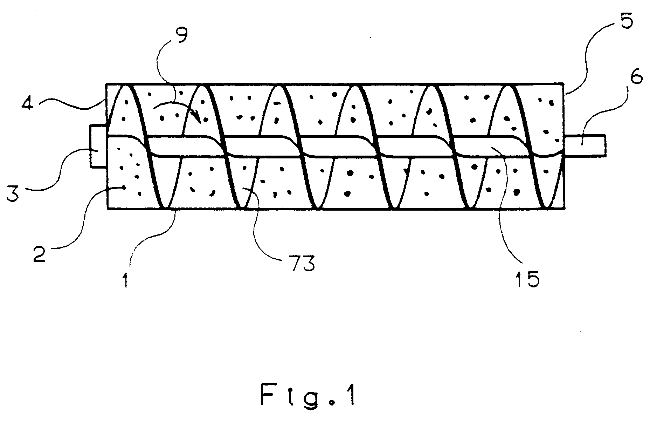

In Fig. 1 ist ein chemischer Sauerstoffgenerator schematisch im Schnitt dargestellt. In einem zylindrischen Gehäuse (1) ist eine Chemikalfüllung (2) angeordnet, die mittels eines Zünders (3) zur Reaktion gebracht werden kann. Die Reaktion läuft vom zündseitigen Ende (4) des Gehäuses (1) zum gegenüberliegenden Ende (5) durch, an dem ein Auslaß (6) für den freigesetzten Sauerstoff angebracht ist. Innerhalb der Chemikalfüllung (2) ist ein in Form einer Förderschnecke gewundenes Reaktionssteuerelement (73) angeordnet. Es erstreckt sich radial von einer geschlossenen Welle (15) bis zur Wandung des Gehäuses (1) und axial vom zündseitigen Ende des Gehäuses (1) bis zu dessen gegenüberliegenden Ende, an dem der Sauerstoffauslaß (6) angeordnet ist. Nach Zündung durch den Zünder (3) läuft die Reaktionsfront (9) wendelförmig zum Auslaß (6). Es ergibt sich ein stark verlängerter Weg der Reaktionsfront (9) mit entsprechend verlängerter Lieferdauer. Durch eine variable Steigung des Reaktionssteuerelementes (73) längs des Weges der Reaktionsfront (9) kann der Verlauf des Sauerstoffflows einem vorgebbaren Profil angepaßt werden. Weiterhin ist es möglich, das Reaktionssteuerelement (73) nur in einem Teilbereich des Weges der Reaktionsfront (9) anzuordnen.

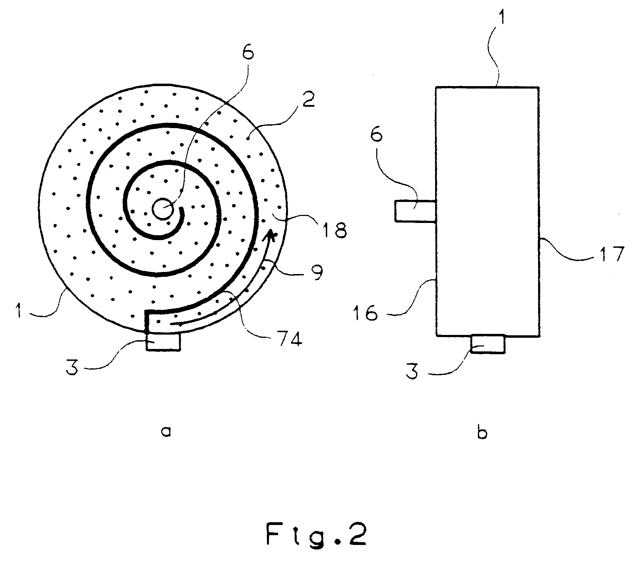

Fig. 2 zeigt als zweites Beispiel einen Generator in Seitenansicht (b) und in Draufsicht im Schnitt (a), dessen Gehäuse (1) in Form einer flachen Dose ausgebildet ist. Das Reaktionssteuerelement (74) ist als spiralig gewundenes Band ausgebildet und erstreckt sich vom Boden (16) bis zum Deckel (17) des Gehäuses (1) Das eine Ende des Bandes ist mit der Außenwandung des Gehäuses (1) verbunden und das andere Ende liegt in der Nähe des Zentrums des Gehäuses (1). Es erzeugt im Innenraum des Gehäuses (1) einen spiralig gewundenen Kanal (18), der mit der Chemikalfüllung (2) gefüllt ist. An diesem Kanal (18) ist an dem innen gelegenen Ende ein Sauerstoffauslaß (6) und an dem äußeren Ende ein Zünder (3) angebracht. Die Anordnung von Zünder (3) und Sauerstoffauslaß (6) kann auch vertauscht werden. Die Reaktionsfront (9) läuft in dem spiralig gewundenen Kanal (18).
Ist das Reaktionssteuerelement (73, 74) aus einem Isolatormaterial gefertigt, so wird die Lieferdauer durch den geometrisch verlängerten Weg der Reaktionsfront (9) erhöht. Ist das Reaktionssteuerelement (73, 74) aus Metallblech gefertigt, so wird die Lieferdauer darüber hinaus durch eine Verlangsamung der Reaktion erhöht.

## Patentansprüche

1. Chemischer Sauerstoffgenerator mit einer innerhalb eines Gehäuses angeordneten Chemikalfüllung, einem Zünder zum Ingangsetzen einer flächig durch die Chemikalfüllung laufenden Reaktionsfront, einer exothermen Sauerstoff freisetzenden Reaktion, einem Sauerstoffauslaß sowie mindestens einem innerhalb der Chemikalfüllung angeordneten Reaktionssteuerelement, dadurch gekennzeichnet, daß das Reaktionssteuerelement in Form einer Förderschnecke (73) ausgebildet ist, die sich radial von einer geschlossenen Welle (15) bis zur Wandung des Gehäuses (1) und axial mindestens in einem Teilbereich der Länge des Gehäuses (1) erstreckt, wodurch ein spiralförmig gewundener Kanal für die Chemikalfüllung gebildet ist.

2. Chemischer Sauerstoffgenerator mit einer innerhalb eines Gehäuses angeordneten Chemikalfüllung, einem Zünder zum Ingangsetzen einer flächig durch die Chemikalfüllung laufenden Reaktionsfront einer exothermen Sauerstoff freisetzenden Reaktion, einem Sauerstoffauslaß sowie mindestens einem innerhalb der Chemikalfüllung angeordneten Reaktionssteuerelement, dadurch gekennzeichnet, daß das Reaktionssteuerelement als spiralig gewundenes Band (74) ausgeführt ist und sich in einem dosenförmigen Gehäuse (1) von einem Boden (16) bis zu einem Deckel (17) erstreckt, wobei das eine Ende des Bandes (74) mit der Außenwandung des Gehäuses (1) verbunden ist und das andere Ende des Bandes (74) in der Nähe des Zentrums des Gehäuses (1) liegt, wodurch ein spiralig gewundener Kanal (18) für die Chemikalfüllung gebildet ist, der an seinem einen Ende mit einem Zünder (3) und an seinem anderen Ende mit einem Sauerstoffauslaß (6) versehen ist.

3. Chemischer Sauerstoffgenerator nach Anspruch 1 oder 2, dadurch gekennzeichnet, daß das Reaktionssteuerelement (73, 74) aus Metallblech gefertigt ist.

4. Chemischer Sauerstoffgenerator nach Anspruch 1 oder 2, dadurch gekennzeichnet, daß das Reaktionssteuerelement (73, 74) aus einem thermischen Isolatormaterial gefertigt ist.

5. Chemischer Sauerstoffgenerator nach Anspruch 4, dadurch gekennzeichnet, daß das thermische Isolatormaterial aus Glas, keramischem oder mineralischen Material aufgebaut ist und in Form eines Faservlieses, einer Faserplatte oder als aufgeschäumter Körper verarbeitet ist.

## Claims

1. Chemical oxygen generator having a chemical filling which is arranged inside a housing, an igniter for setting in motion a reaction front which runs through the chemical filling in a planar manner, an exothermal oxygen-releasing reaction, an oxygen outlet, and also at least one reaction control element which is arranged inside the chemical filling, characterised in that the reaction control element is constructed in the form of a screw conveyor (73), which extends radially from a closed shaft (15) to the wall of the housing (1) and axially at least in one portion of the length of the housing (1), whereby a channel for the chemical filling is formed, which channel is twisted into a spiral shape.

2. Chemical oxygen generator having a chemical filling which is arranged inside a housing, an igniter for setting in motion a reaction front which runs through the chemical filling in a planar manner, an exothermal oxygen-releasing reaction, an oxygen outlet, and also at least one reaction control element which is arranged inside the chemical filling, characterised in that the reaction control element is constructed as a spirally-wound strip (74) and extends from a base (16) to a lid (17) in a box-like housing (1), with the one end of the strip (74) being connected to the outside wall of the housing (1) and the other end of the strip (74) being in the vicinity of the centre of the housing (1), whereby a channel (18) for the chemical filling is formed, which channel is twisted into a spiral shape and is provided at its one end with an igniter (3) and at its other end with an oxygen outlet (6).

3. Chemical oxygen generator according to claim 1 or 2, characterised in that the reaction control element (73, 74) is produced from sheet metal.

4. Chemical oxygen generator according to claim 1 or 2, characterised in that the reaction control element (73, 74) is produced from a thermal insulating material.

5. Chemical oxygen generator according to claim 4, characterised in that the thermal insulating material is made of glass, ceramics material or mineral material and is processed in the form of a fibrous web, or a fibre plate, or is processed as a foamed body.

## Revendications

1. Générateur chimique d'oxygène comportant une charge de produits chimiques disposée à l'intérieur d'un boîtier, une amorce destinée à la mise en route d'un front de réaction, se propageant en nappe à travers la charge de produits chimiques, d'une réaction libérant de l'oxygène exothermique, une sortie d'oxygène ainsi qu'au moins un élément de commande de la réaction situé à l'intérieur de la charge de produits chimiques, caractérisé en ce que l'élément de commande de la réaction se présente sous la forme d'une hélice transporteuse (73), qui s'étend, radialement, d'un arbre fermé (15) jusqu'à la paroi du boîtier (1) et, axialement, au moins sur une partie de la longueur du boîtier (1), ce qui forme un canal, enroulé en spirale, pour la charge de produits chimiques.

2. Générateur chimique d'oxygène comportant une charge de produits chimiques disposée à l'intérieur d'un boîtier, une amorce destinée à la mise en route d'un front de réaction, se propageant en nappe à travers la charge de produits chimiques, d'une réaction libérant de l'oxygène exothermique, une sortie d'oxygène ainsi qu'au moins un élément de commande de la réaction situé à l'intérieur de la charge de produits chimiques, caractérisé en ce que l'élément de commande de la réaction est conformé en bande (74) enroulée en spirale et s'étend, à l'intérieur d'un boitier (1) en forme de boîte, d'un fond (16) jusqu'à un couvercle (17), l'une des extrémités de la bande (74) étant reliée à la paroi extérieure du boîtier (1) et l'autre extrémité de la bande (74) étant située à proximité du centre du boitier (1), ce qui forme un canal (18) enroulé en spirale pour la charge de produits chimiques, qui est pourvu, à l'une de ses extrémités, d'une amorce (3) et, à l'autre extrémité, d'une sortie d'oxygène (6).

3. Générateur chimique d'oxygène selon la revendication 1 ou 2, caractérisé en ce que l'élément de commande de la réaction (73, 74) est constitué en tôle métallique.

4. Générateur chimique d'oxygène selon la revendication 1 ou 2, caractérisé en ce que l'élément de commande de la réaction (73, 74) est constitué en un matériau isolant thermique.

5. Générateur chimique d'oxygène selon la revendication 4, caractérisé en ce que le matériau isolant thermique est du verre, de la céramique ou un matériau minéral et est façonnné sous forme de non-tissé, de panneau de fibres ou de corps moussé.
